# EUROPEAN PATENT APPLICATION

(11) **EP 4 668 990 A1**
(43) Date of publication of application: **24.12.2025**
(21) Application number: 23922037.9
(22) Date of filing: 17.02.2023
(51) Int. Cl.: H04W 72/30

(54) **CONFIGURATION RECEIVING METHOD AND APPARATUS, AND CONFIGURATION RECEPTION DETERMINING METHOD AND APPARATUS**

(71) Applicant: Beijing Xiaomi Mobile Software Co., Ltd., Beijing 100085 (CN)
(72) Inventor: LIU, Xiaofei, Beijing 100085 (CN)
(74) Representative: Dehns Germany Partnerschaft mbB
(86) International application number: PCT/CN2023/076976
(87) International publication number: WO 2024/168906

(57) **Abstract**

The present disclosure relates to the technical field of communications, and in particular relates to a configuration receiving method and apparatus, and a configuration reception determining method and apparatus. The configuration receiving method comprises: when moving from a first cell to a second cell and having no available multicast service configuration in the second cell, determining whether to enter a connected state to acquire a multicast service configuration. In the present disclosure, when a terminal moves from the first cell to the second cell, but has no available multicast service configuration in the second cell, the terminal can determine whether to enter the connected state to acquire the multicast service configuration. Therefore, when there are multiple acquisition modes for the multicast service configuration, the terminal can determine a selection mode of acquiring the multicast service configuration, thus avoiding the terminal failing to determine a certain acquisition mode for acquiring the multicast service configuration and thus causing problems in multicast service reception.

## Description

### TECHNICAL FIELD

The present disclosure relates to the field of communication technology, and in particular, to a configuration receiving method, a configuration reception determining method, a configuration receiving apparatus, a configuration reception determining apparatus, a terminal, a network device, and a computer-readable storage medium.

### BACKGROUND

A terminal can receive multicast service configuration in the connected state, and receive multicast service according to the multicast service configuration in the connected state. However, with the development of communication technology, it is difficult to meet the communication requirements to only receive the multicast service in the connected state.

### SUMMARY

Embodiments of the present disclosure propose a configuration receiving method, a configuration reception determining method, a configuration receiving apparatus, a configuration reception determining apparatus, a terminal, a network device, and a computer-readable storage medium so as to solve technical problems in related art.

According to a first aspect of embodiments of the present disclosure, a configuration receiving method is proposed, which is performed by a terminal. The method includes: in a case of moving from a first cell to a second cell and having no available multicast service configuration in the second cell, determining whether to enter a connected state to obtain the multicast service configuration.

According to a second aspect of embodiments of the present disclosure, a configuration reception determining method is proposed, which is performed by a network device. The method includes: in a case where it is determined that a terminal moves from a first cell to a second cell and has no available multicast service configuration in the second cell, determining whether the terminal enters a connected state to obtain the multicast service configuration.

According to a third aspect of embodiments of the present disclosure, a configuration receiving apparatus is proposed, the apparatus including: a processing module, configured to determine whether to enter a connected state to obtain a multicast service configuration in a case where a terminal moves from a first cell to a second cell and the terminal has no available multicast service configuration in the second cell.

According to a fourth aspect of embodiments of the present disclosure, a configuration reception determining apparatus is proposed, the apparatus including: a processing module, configured to determine whether a terminal enters a connected state to obtain a multicast service configuration in a case where it is determined that the terminal moves from a first cell to a second cell and has no available multicast service configuration in the second cell.

According to a fifth aspect of embodiments of the present disclosure, a configuration receiving system is proposed, including a terminal and a network device, where the terminal is configured to implement the above configuration receiving method, and the network device is configured to implement the above configuration reception determining method.

According to a sixth aspect of embodiments of the present disclosure, a terminal is proposed, including: a processor; and a memory configured to store a computer program; where the computer program, when being executed by the processor, implements the above configuration receiving method.

According to a seventh aspect of embodiments of the present disclosure, a network device is proposed, including: a processor; and a memory configured to store a computer program; where the computer program, when being executed by the processor, implements the above configuration reception determining method.

According to an eighth aspect of embodiments of the present disclosure, there is proposed a computer-readable storage medium configured to store a computer program, where the computer program, when being executed by a processor, implements the above configuration receiving method.

According to a ninth aspect of embodiments of the present disclosure, there is proposed a computer-readable storage medium configured to store a computer program, where the computer program, when being executed by a processor, implements the above configuration reception determining method.

According to the embodiments of the present disclosure, when a terminal moves from a first cell to a second cell but has no available multicast service configuration in the second cell, it can determine whether to enter a connected state to obtain a multicast service configuration. Accordingly, in the case where there are multiple methods to obtain the multicast service configuration, the terminal can determine a selected method for obtaining the multicast service configuration, thereby avoiding problems in receiving multicast service caused by the terminal being unable to determine which obtaining method to use to obtain the multicast service configuration.

### BRIEF DESCRIPTION OF THE DRAWINGS

In order to more clearly illustrate the technical solutions in the embodiments of the present disclosure, the drawings required for use in the description of the embodiments will be briefly introduced below. Obviously, the drawings described below are only some embodiments of the present disclosure. For those of ordinary skill in the art, other drawings can be obtained based on these drawings without creative work.
FIG. 1 is a schematic diagram showing an application scenario according to an embodiment of the present disclosure.
FIG. 2 is a schematic flowchart showing a configuration receiving method according to an embodiment of the present disclosure.
FIG. 3 is a schematic flowchart showing another configuration receiving method according to an embodiment of the present disclosure.
FIG. 4 is a schematic flowchart showing another configuration receiving method according to an embodiment of the present disclosure.
FIG. 5 is a schematic flowchart showing a configuration reception determining method according to an embodiment of the present disclosure.
FIG. 6 is a schematic diagram showing interaction between a terminal and a network device according to an embodiment of the present disclosure.
FIG. 7 is a schematic block diagram showing a configuration receiving apparatus according to an embodiment of the present disclosure.
FIG. 8 is a schematic block diagram showing a configuration reception determining apparatus according to an embodiment of the present disclosure.
FIG. 9 is a schematic block diagram showing an apparatus for configuration reception determining according to an embodiment of the present disclosure.
FIG. 10 is a schematic block diagram showing an apparatus for configuration receiving according to an embodiment of the present disclosure.

### DETAILED DESCRIPTION

The implementations or embodiments of the present disclosure are not exhaustive, but are only illustrative of some implementations or embodiments, and are not intended to be specific limitations on the protection scope of the present disclosure. Where there is no conflict, each step in a certain implementation or embodiment can be implemented as an independent embodiment, and the steps can be combined arbitrarily. For example, the technical solution with some of the steps in a certain implementation or embodiment being removed can also be implemented as an independent embodiment, and the order of the steps in a certain implementation or embodiment can be arbitrarily exchanged. In addition, the options or optional instances in a certain implementation or embodiment can be combined arbitrarily; in addition, the various implementations or embodiments can be combined arbitrarily. For example, some or all steps of different implementations or embodiments can be combined arbitrarily, and a certain implementation or embodiment can be combined arbitrarily with the options or optional instances of other implementations or embodiments.

In some implementations or embodiments, "in response to...", "in the case of...", "at the time of...", "when...", "if...", "in case", etc. in the present disclosure may be replaced with each other.

In some implementations or embodiments, the recitation of the present disclosure, such as "A or B", "A and/or B", "at least one of A and B", "A in one case, B in another case", "in response to one case A, in response to another case B", etc., may include at least one of the following technical solutions depending the situations: performing A independently of B, that is, A in some implementations or embodiments; performing B independently of A, that is, B in some implementations or embodiments; selectively performing A or B, that is, selecting from A and B to perform in some implementations or embodiments; or performing both A and B, that is, A and B in some implementations or embodiments.

In some implementations or embodiments, "including A", "comprising A", "used to indicate A" and "carrying A" in the present disclosure can be interpreted as directly carrying A or indirectly indicating A.

In addition, each element, each row, or each column in the tables involved in the present disclosure can be implemented as an independent embodiment, and the combination of any elements, any rows, or any columns can also be implemented as an independent embodiment.

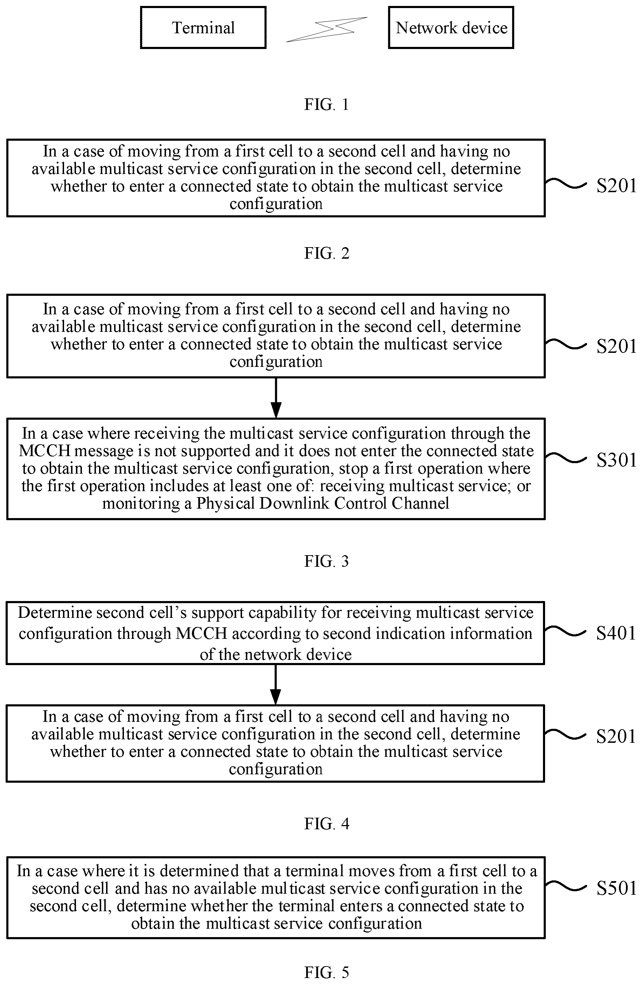

FIG. 1 is a schematic diagram showing an application scenario according to an embodiment of the present disclosure.

As shown in FIG. 1, the embodiments of the present disclosure can be applied to a scenario where a terminal communicates with a network device, but is not limited to this scenario. The subjects shown in FIG. 1 are illustrative. The implementations or embodiments of the present disclosure may include all or part of the subjects in FIG. 1, and may also include other subjects beyond FIG. 1. The number of subjects is arbitrary and is not limited to that in FIG. 1. The connection relationships shown in FIG. 1 are illustrative. Any subjects may be connected or disconnected, and the connection may be in any manner, which may be a direct connection or an indirect connection, or may be a wired connection or a wireless connection.

In an embodiment, the terminal includes but is not limited to communication devices such as a mobile phone, a tablet computer, a wearable device, a sensor, and an Internet of Things device. The terminal can communicate with the network device, including but not limited to network devices in 4G, 5G, 6G and other communication systems, such as a base station, a core networks, etc.

In an embodiment, the terminal may receive multicast service in a non-connected state, where the non-connected state includes at least one of: an idle state or an inactive state.

In an embodiment, in order to receive the multicast service, the terminal may first obtain multicast service configuration, where the multicast service configuration includes configuration information such as time domain resources and frequency domain resources for receiving the multicast service, and the terminal may receive the multicast service according to the multicast service configuration.

In an embodiment, the multicast service configuration may be sent by a network device to the terminal when the terminal is in the connected state. For example, the network device sends the multicast service configuration to the terminal through Radio Resource Control (RRC) signaling.

In an embodiment, the multicast service configuration may be sent by the network device to the terminal when the terminal is in the non-connected state, for example, when the terminal is in the inactive state. For example, the multicast service configuration may be carried in a Multicast/Broadcast Service Control Channel (MBS Control Channel, where MBS stands for Multicast/Broadcast Services) message and sent to the terminal, where MCCH may be sent in a broadcast manner.

It can be seen that there are multiple (for example, two) methods for obtaining the multicast service configuration. Then, when the terminal needs to obtain the multicast service configuration, some technical problems may arise.

It should be noted that receiving the multicast service described in the embodiments of the present disclosure may also be described as receiving data of the multicast service.

FIG. 2 is a schematic flow chart showing a configuration receiving method according to an embodiment of the present disclosure. The configuration receiving method shown in this embodiment can be performed by a terminal.

As shown in FIG. 2, the configuration receiving method may include the following step:
in step S201, in a case of moving from a first cell to a second cell and having no available multicast service configuration in the second cell, determining whether to enter a connected state to obtain the multicast service configuration.

It should be noted that the terminal moving from the first cell to the second cell includes but is not limited to the following two cases.

In a first case, the terminal is in a connected state, and the terminal moves from the first cell to the second cell, including the terminal switching from the first cell to the second cell.

In a second case, the terminal is in a non-connected state, and the terminal moves from the first cell to the second cell, including the terminal's reselection to the second cell from the first cell.

In an embodiment, the terminal is a terminal that joins the multicast service, which can also be described as a terminal that joins a multicast service session. In this case, the terminal can receive the multicast service, so the terminal needs to first obtain the multicast service configuration, and then receives the multicast service according to the multicast service configuration.

In an embodiment, the available multicast service configuration may be different in different cells. When the terminal moves from the first cell to the second cell, if there is multicast service configuration available for the second cell, the multicast service can be received according to the available multicast service configuration; if there is no multicast service configuration available for the second cell, it needs to obtain the multicast service configuration.

According to an embodiment of the present disclosure, when the terminal moves from the first cell to the second cell but has no available multicast service configuration in the second cell, it can determine whether to enter a connected state to obtain the multicast service configuration. Accordingly, in the case where there are multiple methods for obtaining the multicast service configuration, the terminal can determine a selected method for obtaining the multicast service configuration, thereby avoiding problems in receiving the multicast service caused by the terminal being unable to determine which obtaining method to use to obtain the multicast service configuration.

In an embodiment, when the terminal resides on the first cell before moving to the second cell, the network device may send one of the following information to the terminal:
multicast service configuration, where the terminal can receive the multicast service in an inactive state according to the multicast service configuration. The multicast service configuration is associated with one or more valid areas, and the valid areas include at least one of: a cell, a radio notification area (RAN Notification Area, RNA, where RAN stands for Radio Access Network); a Tracking Area (TA); a Registration Area (RA), or a Location Area (LA). That is, the multicast service configuration is applicable to one or more valid areas. If it is not associated with any valid area, the multicast service configuration is only applicable to the current serving cell by default;
MCCH reception configuration, where the terminal can receive a MCCH message in an inactive state according to the MCCH reception configuration. Optionally, the MCCH reception configuration is associated with one or more valid areas, and the valid area includes at least one of: a cell, a RNA, a TA, a RA, or a LA. That is, the MCCH reception configuration is applicable to one or more valid areas. If it is not associated with any valid area, the MCCH reception configuration is only applicable to the current serving cell by default;
neighbor cell information, used to indicate whether a neighboring cell of the first cell supports the multicast service joined by the terminal (for example, an inactive-state multicast service); or
indication information, used for the terminal to determine whether to trigger RRC connection resume in a case where the multicast service configuration in the cell is unavailable.

In an embodiment, determining whether to enter the connected state to obtain the multicast service configuration includes: determining whether to enter the connected state to obtain the multicast service configuration according to at least one of the following:
support capability for receiving multicast service configuration through a Multicast/Broadcast Service Control Channel (MCCH) message;
status of a multicast service session;
a priority of the multicast service; or
first indication information of the network device.

In an embodiment, determining whether to enter the connected state to obtain the multicast service configuration includes:
entering the connected state to obtain the multicast service configuration in a case where a first condition is met, where the first condition includes at least one of the following:
receiving the multicast service configuration through the MCCH message is not supported;
the status of the multicast service session is that the multicast service session is in an active state;
the priority of the multicast service is higher than a first priority; or
the first indication information indicates the terminal to enter the connected state.

In an embodiment, determining whether to enter the connected state to obtain the multicast service configuration includes:
not entering the connected state to obtain the multicast service configuration in a case where a second condition is met, where the second condition includes at least one of the following:
receiving the multicast service configuration through the MCCH message is supported;
the status of the multicast service session is that the multicast service session is in an inactive state;
the priority of the multicast service is lower than the first priority; or
the first indication information indicates the terminal not to enter the connected state.

In an embodiment, as for the four items of the terminal's support capability for receiving the multicast service configuration through the MCCH message, the status of the multicast service session, the priority of the multicast service, and the first indication information of the network device, it can be determined, according to only one of the four items, whether to enter the connected state to obtain the multicast service configuration, or it can be determined, according to multiple items of the four items, whether to enter the connected state to obtain the multicast service configuration.

The following illustrates, through several embodiments, determining whether to enter the connected state to obtain the multicast service configuration according to one of the above four items.

In an embodiment, the terminal may determine whether to enter the connected state to obtain the multicast service configuration according to the support capability for receiving the multicast service configuration through the MCCH message.

The network device may carry the multicast service configuration in the MCCH message and send it to the terminal. On this basis, the network device may also carry broadcast service configuration in the MCCH and send it to the terminal.

Some terminals support receiving multicast service configuration through the MCCH message, while some terminals do not support receiving multicast service configuration through the MCCH message. Therefore, the terminal can determine whether to enter the connected state to obtain the multicast service configuration according to the support capability for receiving the multicast service configuration through the MCCH message.

In an embodiment, determining whether to enter the connected state to obtain the multicast service configuration includes: when receiving the multicast service configuration through the MCCH message is supported, receiving the multicast service configuration through the MCCH message; or, when receiving the multicast service configuration through the MCCH message is not supported, entering the connected state to obtain the multicast service configuration.

When the terminal's support capability is that it supports receiving multicast service configuration through the MCCH message, the terminal can receive the multicast service configuration through the MCCH message. Accordingly, it is not necessary to enter the connected state, which facilitates saving communication resources occupied by interaction with the network device during the process of entering the connected state.

When the terminal's support capability is that it does not support receiving multicast service configuration through the MCCH message, the terminal can enter the connected state to obtain the multicast service configuration, thereby ensuring that the multicast service configuration can be obtained so as to receive multicast according to the multicast service configuration.

It should be noted that, in the embodiments of the present disclosure, when the terminal determines to enter the connected state to obtain the multicast service configuration, it can first trigger RRC connection establishment to establish RRC connection with the network device, thereby entering the connected state.

In an embodiment, the terminal may determine whether to enter the connected state to obtain the multicast service configuration according to status of a multicast service session.

When the terminal joins a multicast service session, the terminal can determine the status of the multicast service session, where the status of the multicast service session includes at least one of: an active state or an inactive state.

For example, when the multicast service session is in an active state, the terminal may determine that the communication related to the multicast service is relatively urgent, and therefore needs to obtain the multicast service configuration as soon as possible to receive the multicast service.

However, MCCH is generally transmitted periodically. If the terminal does not enter the connected state to obtain the multicast service configuration, but obtains the multicast service configuration through the MCCH message, it needs to wait until the nearest next MCCH transmission period to receive the MCCH message. This may result in too long waiting time, affecting the communication effect of the multicast service. Therefore, the terminal can enter the connected state, and then obtain the multicast service configuration from the network device, so as to obtain the multicast service configuration as soon as possible to receive the multicast service, which is conducive to ensuring the communication effect of the multicast service.

For example, when the multicast service session is in an inactive state, the terminal may determine that the communication related to the multicast service is relatively not urgent, and therefore it is not necessary to obtain the multicast service configuration as soon as possible to receive the multicast service.

In this case, the terminal may not enter the connected state to obtain the multicast service configuration, but receive the multicast service configuration through the MCCH message, for example, wait until the nearest next MCCH transmission period to receive the MCCH message, thereby obtaining the multicast service configuration from the MCCH message, and then receiving the multicast service according to the multicast service configuration. Accordingly, it is conducive to saving the communication resources occupied by interaction with the network device during the process of entering the connected state.

In an embodiment, the terminal may determine whether to enter the connected state to obtain the multicast service configuration according to the priority of the multicast service.

When the terminal joins a multicast service, the terminal can determine the priority of the multicast service. The priority of the multicast service can be agreed upon by a protocol or indicated by the network device. For example, the multicast service can be configured with an identifier, and association relationship between the identifier of the multicast service and the priority of the multicast service is agreed upon by a protocol or indicated by the network device. The terminal can determine the priority of the multicast service to be joined according to the association relationship.

For example, when the priority of the multicast service is higher than a first priority, the terminal can determine that the priority of the multicast service is relatively high, and the communication related to the multicast service is relatively urgent, so it is necessary to obtain the multicast service configuration as soon as possible to receive the multicast service. The first priority can be indicated by the network device or agreed upon by a protocol.

However, MCCH is generally transmitted periodically. If the terminal does not enter the connected state to obtain the multicast service configuration, but obtains the multicast service configuration through the MCCH message, it needs to wait until the nearest next MCCH transmission period to receive the MCCH message. This may result in too long waiting time, affecting the communication effect of the multicast service. Therefore, the terminal can enter the connected state, and then obtain the multicast service configuration from the network device, so as to obtain the multicast service configuration as soon as possible to receive the multicast service, which is conducive to ensuring the communication effect of the multicast service.

For example, when the priority of the multicast service is lower than or equal to the first priority, the terminal can determine that the priority of the multicast service is relatively low, and can thus determine that the communication related to the multicast service is relatively not urgent, so there is no need to obtain the multicast service configuration as soon as possible to receive the multicast service.

In this case, the terminal may not enter the connected state to obtain the multicast service configuration, but receive the multicast service configuration through the MCCH message, for example, wait until the nearest next MCCH transmission period to receive the MCCH message, thereby obtaining the multicast service configuration from the MCCH message, and then receiving the multicast service according to the multicast service configuration. Accordingly, it is conducive to saving the communication resources occupied by interaction with the network device during the process of entering the connected state.

In an embodiment, the terminal may determine whether to enter the connected state to obtain the multicast service configuration according to the first indication information of the network device.

The network device may send the first indication information to the terminal according to the current network environment, where the first indication information is used to indicate whether the terminal enters the connected state to obtain the multicast service configuration.

Since the network device is relatively familiar with the overall network environment, compared with the terminal autonomously determining whether to enter the connected state to obtain the multicast service configuration, indicating the terminal by the network device whether to enter the connected state to obtain the multicast service configuration can better adapt to the current network environment. Therefore, the terminal can determine whether to enter the connected state to obtain the multicast service configuration according to the first indication information of the network device.

For example, when the first indication information indicates the terminal to enter the connected state to obtain the multicast service configuration, the terminal may enter the connected state to obtain the multicast service configuration from the network device.

For example, when the first indication information indicates the terminal not to enter the connected state to obtain the multicast service configuration, the terminal may not enter the connected state to obtain the multicast service configuration, but instead receive the multicast service configuration through the MCCH message, for example, waiting until the nearest next MCCH transmission period to receive the MCCH message, thereby obtaining the multicast service configuration from the MCCH message, and then receiving the multicast service according to the multicast service configuration.

The following illustrates, by way of several embodiments, determining whether to enter the connected state to obtain the multicast service configuration according to multiple items of the above four items.

In an embodiment, the terminal can determine whether to enter the connected state to obtain the multicast service configuration based on two or more of the four items: the support capability for receiving the multicast service configuration through the MCCH message, the status of the multicast service session, the priority of the multicast service, and the first indication information of the network device.

In an embodiment, whether to enter the connected state to obtain the multicast service configuration can be determined for each item. If there is no conflict in the results determined for the respective items, it can enter the connected state to obtain the multicast service configuration or not enter the connected state to obtain the multicast service configuration, according to the determined results.

For example, for the support capability of receiving the multicast service configuration through the MCCH message, the terminal has the capability of receiving the multicast service configuration through the MCCH message, and the result determined according to this item is not to enter the connected state to obtain multicast service configuration; for the first indication information of the network device, the first indication information indicates the terminal not to enter the connected state to obtain multicast service configuration, and the result determined according to this item is not to enter the connected state to obtain multicast service configuration. Then there is no conflict in the results determined according to these two items, and it does not enter the connected state to obtain the multicast service configuration according to the determined results.

For example, for the support capability of receiving the multicast service configuration through the MCCH message, the terminal does not have the capability of receiving the multicast service configuration through the MCCH message, and the result determined according to this item is to enter the connected state to obtain multicast service configuration; for the status of the multicast service session, the status of the multicast service session is an active state, and the result determined according to this item is to enter the connected state to obtain multicast service configuration. Then there is no conflict between the results determined according to these two items, and it can enter the connected state to obtain multicast service configuration according to the determined results.

In an embodiment, it may be determined for each item whether to enter the connected state to obtain the multicast service configuration. If there is a conflict in the results determined for the respective items, the priority of each item may be further considered.

For the convenience of description, the first item represents the support capability for receiving the multicast service configuration through the multicast/broadcast service control channel (MCCH) message; the second item represents the status of the multicast service session; the third item represents the priority of the multicast service; and the fourth item represents the first indication information of the network device.

For example, the fourth item has the highest priority, the first item has the lowest priority, and the second and third items have priorities between those of the first and fourth items, which can be set as needed. For example, the priority of the second item may be higher than that of the third item, or the priority of the third item may be higher than that of the second item. The following description mainly takes the example where the priority of the third item is higher than that of the second item, so the priorities of the above four items are in the order of the fourth item, the third item, the second item, and the first item from high to low.

The terminal may first determine for each item whether to enter the connected state to obtain the multicast service configuration. If the results determined for each item conflict, the terminal determines whether to enter the connected state to obtain the multicast service configuration according to the result corresponding to the item with the highest priority.

For example, for the first item, the terminal has the capability of receiving the multicast service configuration through the MCCH message, and the result determined according to the first item is not to enter the connected state to obtain the multicast service configuration; for the fourth item, the first indication information indicates the terminal to enter the connected state to obtain the multicast service configuration, and the result determined according to the fourth item is to enter the connected state to obtain the multicast service configuration. Then, there is a conflict between the results determined according to these two items, among which the fourth item has the highest priority, and it can enter the connected state to obtain the multicast service configuration according to the result corresponding to the fourth item.

For example, for the first item, the terminal does not have the capability of receiving the multicast service configuration through the MCCH message, and the result determined according to the first item is to enter the connected state to obtain the multicast service configuration; for the second item, the status of the multicast service session is an inactive state, and the result determined according to this item is not to enter the connected state to obtain the multicast service configuration. Then there is a conflict between the results determined according to these two items, among which the second item has the highest priority, and it does not enter the connected state to obtain the multicast service configuration according to the result corresponding to the second item.

FIG. 3 is a schematic flow chart showing another configuration receiving method according to an embodiment of the present disclosure, and the configuration receiving method can be performed by a terminal. As shown in FIG. 3, the configuration receiving method further includes:
in step S301, in a case where receiving the multicast service configuration through the MCCH message is not supported and it does not enter the connected state to obtain the multicast service configuration, stopping a first operation, where the first operation includes at least one of the following:
receiving the multicast service; or
monitoring a Physical Downlink Control Channel (PDCCH).

It should be noted that the embodiment shown in FIG. 3 may be implemented independently or in combination with at least one other embodiment in the present disclosure, which can be specifically selected as needed and is not limited in the present disclosure.

In an embodiment, in the case where the terminal does not support receiving the multicast service configuration through the MCCH message, it determines not to enter the connected state to obtain the multicast service configuration, then the multicast service configuration cannot be obtained for a period of time, and the multicast service cannot be received according to the multicast service configuration.

In this case, the terminal can stop receiving the multicast service or stop monitoring the PDCCH, which is beneficial to saving terminal power consumption. The PDCCH can carry downlink control information (DCI), which is used to schedule a physical downlink shared channel (PDSCH) for transmitting the multicast service. The DCI can also be used to notify MCCH change.

In an embodiment, the support capability for receiving the multicast service configuration through the multicast/broadcast service control channel includes at least one of the following:
the terminal's support capability for receiving the multicast service configuration through the MCCH message; or
the second cell's support capability for receiving the multicast service configuration through the MCCH message.

In an embodiment, the terminal may determine whether the terminal supports receiving the multicast service configuration through the MCCH according to the terminal's own support capability for receiving the multicast service configuration through the MCCH message.

For example, if the terminal's own support capability for receiving the multicast service configuration through the MCCH message is that it supports receiving the multicast service configuration through the MCCH, the terminal supports receiving the multicast service configuration through the MCCH. For example, if the terminal's own support capability for receiving the multicast service configuration through the MCCH message is that it does not support receiving the multicast service configuration through the MCCH, the terminal does not support receiving the multicast service configuration through the MCCH.

In an embodiment, the terminal may determine whether the terminal supports receiving the multicast service configuration through the MCCH according to the second cell's support capability for receiving the multicast service configuration through the MCCH message.

For example, if the second cell's support capability for receiving the multicast service configuration through the MCCH message is that it supports receiving the multicast service configuration through the MCCH, the terminal supports receiving the multicast service configuration through MCCH. For example, if the second cell's support capability for receiving the multicast service configuration through the MCCH message is that it does not support receiving the multicast service configuration through the MCCH, the terminal does not support receiving the multicast service configuration through the MCCH.

In an embodiment, the terminal may determine whether the terminal supports receiving the multicast service configuration through the MCCH according to the terminal's own support capability for receiving the multicast service configuration through the MCCH message and the second cell's support capability for receiving the multicast service configuration through the MCCH message.

For example, if the terminal's own support capability for receiving the multicast service configuration through the MCCH messages is that it supports receiving the multicast service configuration through the MCCH, and the second cell's support capability for receiving the multicast service configuration through the MCCH messages is that it supports receiving the multicast service configuration through the MCCH, the terminal supports receiving the multicast service configuration through the MCCH.

For example, if the terminal's own support capability for receiving the multicast service configuration through the MCCH messages is that it does not support receiving the multicast service configuration through the MCCH, and the second cell's support capability for receiving the multicast service configuration through the MCCH messages is that it supports receiving the multicast service configuration through the MCCH, the terminal does not support receiving the multicast service configuration through the MCCH.

For example, if the terminal's own support capability for receiving the multicast service configuration through the MCCH messages is that it does not support receiving the multicast service configuration through the MCCH, and the second cell's support capability for receiving the multicast service configuration through the MCCH messages is that it supports receiving the multicast service configuration through the MCCH, the terminal does not support receiving the multicast service configuration through the MCCH.

For example, if the terminal's own support capability for receiving the multicast service configuration through the MCCH messages is that it does not support receiving the multicast service configuration through the MCCH, and the second cell's support capability for receiving the multicast service configuration through the MCCH messages is that it does not support receiving the multicast service configuration through the MCCH, the terminal does not support receiving the multicast service configuration through the MCCH.

In an embodiment, the terminal's support capability for receiving the multicast service configuration through the MCCH is determined based on at least one of the following:
whether the terminal has an available MCCH reception configuration; or
the terminal's support capability for obtaining MCCH reception configuration through a broadcast message.

The MCCH reception configuration refers to the configuration for receiving the MCCH, for example, it may indicate time domain resources and frequency domain resources for receiving the MCCH.

In an embodiment, the MCCH reception configuration is carried in at least one of the following:
system information; or
dedicated signaling.

The system information may include, for example, a System Information Block (SIB). The dedicated signaling may include RRC signaling, and the RRC signaling includes but is not limited to at least one of the following: Radio Resource Control Release (RRCRelease) signaling, Radio Resource Control Reconfiguration (RRCReconfiguration) signaling, and Radio Resource Control Resume (RRCResume) response signaling (e.g., RRCResume).

In an embodiment, the terminal may determine whether the terminal supports receiving the multicast service configuration through the MCCH according to whether the terminal has an available MCCH reception configuration.

For example, if the terminal has an available MCCH reception configuration, it can receive the MCCH message according to the MCCH reception configuration, so the terminal supports receiving the multicast service configuration through the MCCH. For example, if the terminal does not have an available MCCH reception configuration, it cannot receive the MCCH message according to the MCCH reception configuration, so the terminal does not support receiving the multicast service configuration through the MCCH.

In an embodiment, the terminal may determine whether the terminal supports receiving the multicast service configuration through the MCCH according to the terminal's support capability for obtaining the MCCH reception configuration through the broadcast message.

For example, if the terminal's support capability for obtaining the MCCH reception configuration through the broadcast message is that the terminal supports obtaining the MCCH reception configuration through the broadcast message, the terminal can obtain the MCCH reception configuration from the broadcast message, and can thus receive the MCCH message according to the MCCH reception configuration, so the terminal supports receiving the multicast service configuration through the MCCH. For example, if the terminal's support capability for obtaining the MCCH reception configuration through the broadcast message is that the terminal does not support obtaining the MCCH reception configuration through the broadcast message, since the MCCH reception configuration is carried in the broadcast message, the terminal cannot obtain the MCCH reception configuration from the broadcast message, and thus cannot receive the MCCH message according to MCCH reception configuration, so the terminal does not support receiving the multicast service configuration through the MCCH.

It should be noted that the terminal not supporting obtaining the MCCH reception configuration through the broadcast message includes that part or all of the configuration in the MCCH reception configuration is provided through dedicated signaling, and the terminal needs to enter the connected state to obtain the MCCH reception configuration through the dedicated signaling. If the terminal does not have an available MCCH reception configuration, it can enter the connected state, obtain the MCCH reception configuration through the dedicated signaling, and then receive the MCCH message according to the MCCH reception configuration.

In an embodiment, the terminal may determine whether the terminal supports receiving the multicast service configuration through the MCCH according to whether the terminal has an available MCCH reception configuration and according to the terminal's support capability for obtaining the MCCH reception configuration through the broadcast message.

For example, if the terminal has an available MCCH reception configuration, and the terminal's support capability for obtaining the MCCH reception configuration through the broadcast message is that it supports obtaining the MCCH reception configuration through the broadcast message, the terminal supports receiving the multicast service configuration through the MCCH.

For example, if the terminal does not have an available MCCH reception configuration, and the terminal's support capability for obtaining the MCCH reception configuration through the broadcast message is that it supports obtaining the MCCH reception configuration through the broadcast message, the terminal supports receiving the multicast service configuration through the MCCH.

For example, if the terminal has an available MCCH reception configuration, and the terminal's support capability for obtaining the MCCH reception configuration through the broadcast message is that it does not support obtaining the MCCH reception configuration through the broadcast message, the terminal supports receiving the multicast service configuration through the MCCH.

For example, if the terminal does not have an available MCCH reception configuration, and the terminal's support capability for obtaining the MCCH reception configuration through the broadcast message is that it does not support obtaining the MCCH reception configuration through the broadcast message, the terminal does not support receiving the multicast service configuration through the MCCH.

In an embodiment, the second cell's support capability for receiving the multicast service configuration through the MCCH is determined based on at least one of the following:
whether the second cell supports inactive multicast service;
whether the second cell supports broadcasting a MCCH message; or
whether the second cell supports broadcasting MCCH reception configuration.

In an embodiment, the terminal may determine whether the second cell supports receiving the multicast service configuration through the MCCH according to whether the second cell supports the inactive multicast service.

For example, if the second cell supports the inactive multicast service, the terminal can determine that the second cell supports receiving the multicast service configuration through MCCH. For example, if the second cell does not support the inactive multicast service, the terminal can determine that the second cell does not support receiving multicast service configuration through MCCH.

In an embodiment, the terminal may determine whether the second cell supports receiving the multicast service configuration through the MCCH according to whether the second cell supports broadcasting the MCCH message.

For example, if the second cell supports broadcasting the MCCH message, the second cell can carry the multicast service configuration by broadcasting the MCCH message, so the terminal can determine that the second cell supports receiving the multicast service configuration through MCCH. For example, if the second cell does not support broadcasting the MCCH message, the second cell cannot carry the multicast service configuration by broadcasting the MCCH message, and thus the terminal can determine that the second cell does not support receiving the multicast service configuration through MCCH.

In an embodiment, the terminal may determine whether the second cell supports receiving the multicast service configuration through the MCCH according to whether the second cell supports broadcasting the MCCH reception configuration.

For example, if the second cell supports broadcasting the MCCH reception configuration, the terminal may determine that the second cell supports receiving the multicast service configuration through MCCH. For example, if the second cell does not support broadcasting MCCH reception configuration, the terminal may determine that the second cell does not support receiving the multicast service configuration through MCCH.

It should be noted that the second cell not supporting broadcasting the MCCH reception configuration includes that part or all of the configuration in the MCCH reception configuration is provided by dedicated signaling. The terminal needs to enter the connected state in the second cell to obtain the MCCH reception configuration through the dedicated signaling. If the terminal does not have an available MCCH reception configuration in the second cell, it can enter the connected state, obtain the MCCH reception configuration through the dedicated signaling, and then receive the MCCH message according to the MCCH reception configuration.

In an embodiment, the terminal may determine whether the second cell supports receiving the multicast service configuration through MCCH according to whether the second cell supports the inactive multicast service, whether the second cell supports broadcasting the MCCH message, and whether the second cell supports broadcasting the MCCH reception configuration.

As long as the second cell supports broadcasting the MCCH message, regardless of whether the second cell supports inactive multicast services or not, and whether the second cell supports broadcasting MCCH reception configuration or not, it can be determined that the second cell supports receiving the multicast service configuration through MCCH.

When the second cell does not support broadcasting the MCCH message, no matter whether the second cell supports the inactive multicast service or not and whether the second cell supports broadcasting the MCCH reception configuration or not, it can be determined that the second cell does not support receiving the multicast service configuration through MCCH.

FIG. 4 is a schematic flow chart showing another configuration receiving method according to an embodiment of the present disclosure, and the configuration receiving method can be performed by a terminal. As shown in FIG. 4, the configuration receiving method further includes:

in step S401, determining the second cell's support capability for receiving multicast service configuration through MCCH according to second indication information of the network device.

It should be noted that the embodiment shown in FIG. 4 can be implemented independently or in combination with at least one other embodiment in the present disclosure, which can be specifically selected as needed, and is not limited in the present disclosure.

The indication information such as the first indication information and the second indication information in the embodiments of the present disclosure may be system information or dedicated signaling, which is not limited in the present disclosure.

In an embodiment, the network device may indicate, through the second indication information sent in the first cell, the support capability of the second cell for receiving the multicast service configuration through the MCCH. In addition to indicating the support capability of the second cell for receiving the multicast service configuration through the MCCH, the second cell may also indicate the support capability of neighboring cells of the first cell for receiving the multicast service configuration through the MCCH.

Accordingly, according to the second indication information, the terminal can determine the support capability of the second cell for receiving the multicast service configuration through the MCCH, and can also determine the support capability of the neighboring cells of the first cell for receiving the multicast service configuration through the MCCH. Accordingly, when the terminal subsequently moves to any neighboring cell of the first cell, it can promptly determine the support capability of the moved-to cell for receiving the multicast service configuration through the MCCH.

FIG. 5 is a schematic flow chart showing a configuration reception determining method according to an embodiment of the present disclosure. The configuration reception determining method shown in this embodiment can be performed by a network device, and the network device can communicate with a terminal. The network device includes but is not limited to base stations in communication systems such as a 4G base station, a 5G base station, and a 6G base station, and the terminal includes but is not limited to communication devices such as a mobile phone, a tablet computer, a wearable device, a sensor and an Internet of Things device.

As shown in FIG. 5, the configuration reception determining method may include the following step:
in step S501, in a case where it is determined that a terminal moves from a first cell to a second cell and has no available multicast service configuration in the second cell, determining whether the terminal enters a connected state to obtain the multicast service configuration.

It should be noted that the terminal moving from the first cell to the second cell includes but is not limited to the following two cases.

In a first case, the terminal is in a connected state, and the terminal moves from the first cell to the second cell, including the terminal switching from the first cell to the second cell.

In a second case, the terminal is in a non-connected state, and the terminal moves from the first cell to the second cell, including the terminal's reselection to the second cell from the first cell.

In an embodiment, the terminal is a terminal that joins the multicast service, which can also be described as a terminal that joins a multicast service session. In this case, the terminal can receive the multicast service, so the terminal needs to first obtain the multicast service configuration, and then receives the multicast service according to the multicast service configuration.

In an embodiment, the available multicast service configuration may be different in different cells. The network device determines that the terminal moves from the first cell to the second cell, and if the terminal has available multicast service configuration in the second cell, it may be determined that the terminal receives the multicast service according to the available multicast service configuration; if the terminal does not have available multicast service configuration in the second cell, it can determine that the terminal needs to obtain the multicast service configuration.

According to the embodiment of the present disclosure, when the network device determines that the terminal moves from the first cell to the second cell and does not have available multicast service configuration in the second cell, it can determine whether the terminal enters the connected state to obtain the multicast service configuration. Accordingly, in the case where there are multiple methods to obtain the multicast service configuration, the network device can determine whether the terminal enters the connected state to obtain the multicast service configuration so as to perform subsequent communication with the terminal.

In an embodiment, when the terminal resides on the first cell before moving to the second cell, the network device may send one of the following information to the terminal:
multicast service configuration, where the terminal can receive the multicast service in an inactive state according to the multicast service configuration. The multicast service configuration is associated with one or more valid areas, and the valid areas include at least one of: a cell, a radio notification area (RAN Notification Area, RNA, where RAN stands for Radio Access Network); a Tracking Area (TA); a Registration Area (RA), or a Location Area (LA). That is, the multicast service configuration is applicable to one or more valid areas. If it is not associated with any valid area, the multicast service configuration is only applicable to the current serving cell by default;
MCCH reception configuration, where the terminal can receive a MCCH message in an inactive state according to the MCCH reception configuration. Optionally, the MCCH reception configuration is associated with one or more valid areas, and the valid area includes at least one of: a cell, a RNA, a TA, a RA, or a LA. That is, the MCCH reception configuration is applicable to one or more valid areas. If it is not associated with any valid area, the MCCH reception configuration is only applicable to the current serving cell by default;
neighboring cell information, used to indicate whether a neighboring cell of the first cell supports the multicast service joined by the terminal (for example, an inactive-state multicast service); or
indication information, used for the terminal to determine whether to trigger RRC connection resume in a case where the multicast service configuration in the cell is unavailable.

In an embodiment, determining whether the terminal enters the connected state to obtain the multicast service configuration includes:
determining whether the terminal enters the connected state to obtain the multicast service configuration according to at least one of the following:
the terminal's support capability for receiving multicast service configuration through a Multicast/Broadcast Service Control Channel (MCCH) message;
status of a multicast service session of the terminal;
a priority of the multicast service of the terminal; or
first indication information of the network device.

In an embodiment, determining whether the terminal enters the connected state to obtain the multicast service configuration includes:
determining that the terminal enters the connected state to obtain the multicast service configuration in a case where a first condition is met, where the first condition includes at least one of the following:
the terminal does not support receiving the multicast service configuration through the MCCH message;
the status of the multicast service session is that the multicast service session is in an active state;
the priority of the multicast service is higher than a first priority; or
the first indication information indicates the terminal to enter the connected state.

In an embodiment, determining whether to enter the connected state to obtain the multicast service configuration includes:
determining that the terminal does not enter the connected state to obtain the multicast service configuration in a case where a second condition is met, where the second condition includes at least one of the following:
the terminal supports receiving the multicast service configuration through the MCCH message;
the status of the multicast service session is that the multicast service session is in an inactive state;
the priority of the multicast service is lower than a first priority; or
the first indication information indicates the terminal not to enter the connected state.

In an embodiment, as for the four items of the terminal's support capability for receiving the multicast service configuration through the MCCH message, the status of the multicast service session, the priority of the multicast service, and the first indication information of the network device, the network device may determine, according to only one of the four items, whether the terminal enters the connected state to obtain the multicast service configuration, or may determine, according to multiple items of the four items, whether the terminal enters the connected state to obtain the multicast service configuration.

The following illustrates, through several embodiments, determining whether to enter the connected state to obtain the multicast service configuration according to one of the above four items.

In an embodiment, the network device may determine whether the terminal enters the connected state to obtain the multicast service configuration according to the terminal's support capability for receiving the multicast service configuration through the MCCH message.

The network device may carry the multicast service configuration in the MCCH message and send it to the terminal, and on this basis, it may also carry the broadcast service configuration in the MCCH and send it to the terminal.

Some terminals support receiving the multicast service configuration through the MCCH message, while some terminals do not support receiving the multicast service configuration through the MCCH message. Therefore, the network device can determine whether the terminal enters the connected state to obtain the multicast service configuration according to the terminal's support capability for receiving the multicast service configuration through the MCCH message.

In an embodiment, determining whether the terminal enters the connected state to obtain the multicast service configuration includes: when the terminal supports receiving the multicast service configuration through the MCCH message, determining that the terminal receives the multicast service configuration through the MCCH message; or, when the terminal does not support receiving the multicast service configuration through the MCCH message, determining that the terminal enters the connected state to obtain the multicast service configuration.

When it is determined that the terminal's support capability is that it supports receiving the multicast service configuration through the MCCH message, it can be determined that the terminal receives the multicast service configuration through the MCCH message. Accordingly, it is not necessary to establish or resume an RRC connection with the terminal, which is beneficial to saving communication resources occupied by the interaction between the network device and the terminal in the process of entering the connected state.

When it is determined that the terminal's support capability is that it does not support receiving the multicast service configuration through the MCCH message, it can be determined that the terminal needs to enter the connected state to obtain the multicast service configuration. Accordingly, the RRC connection with the terminal can be established or resumed to ensure that the terminal can obtain the multicast service configuration, and then receive multicast according to the multicast service configuration.

It should be noted that, in the embodiment of the present disclosure, when it is determined that the terminal enters the connected state to obtain the multicast service configuration, the RRC connection with the terminal can be established or resumed, so that the terminal enters the connected state.

In an embodiment, the network device may determine whether the terminal enters the connected state to obtain the multicast service configuration according to the status of the multicast service session joined by the terminal.

In a case where the terminal joins a multicast service session, the network device may determine status of the multicast service session, where the status of the multicast service session includes at least one of the following: an active state, or an inactive state.

For example, when the multicast service session is in an active state, the network device may determine that the communication related to the multicast service is relatively urgent and the terminal needs to obtain the multicast service configuration as soon as possible to receive the multicast service.

However, MCCH is generally transmitted periodically. If the terminal does not enter the connected state to obtain the multicast service configuration, but obtains the multicast service configuration through the MCCH message, it needs to wait until the nearest next MCCH transmission period to receive the MCCH message. This may result in too long waiting time, affecting the communication effect of the multicast service. Therefore, it can be determined that the terminal enters the connected state, and then the multicast service configuration is sent to the terminal in the connected state, so that the terminal can obtain the multicast service configuration as soon as possible to receive the multicast service, which is conducive to ensuring the communication effect of the multicast service.

For example, when the multicast service session is in an inactive state, the network device may determine that the communication related to the multicast service is relatively not urgent, and the terminal does not need to obtain the multicast service configuration as soon as possible to receive the multicast service.

In this case, it can be determined that the terminal does not enter the connected state to obtain the multicast service configuration, but receives the multicast service configuration through the MCCH message. For example, the terminal waits until the nearest next MCCH transmission period to receive the MCCH message, thereby obtaining the multicast service configuration from the MCCH message, and then receives the multicast service according to the multicast service configuration. This is conducive to saving the communication resources occupied by interaction with the network device during the process of entering the connected state.

In an embodiment, the network device may determine whether the terminal enters the connected state to obtain the multicast service configuration according to the priority of the multicast service.

In a case where the terminal joins a multicast service, the network device can determine a priority of the multicast service. The priority of the multicast service can be agreed upon by a protocol or indicated by the network device. For example, the multicast service can be configured with an identifier, and association relationship between the identifier of the multicast service and the priority of the multicast service is agreed upon by the protocol or indicated by the network device. The network device can determine the priority of the multicast service joined by the terminal based on the association relationship.

For example, when the priority of the multicast service is higher than the first priority, the network device can determine that the priority of the multicast service is relatively high, then the communication related to the multicast service is relatively urgent, and the terminal needs to obtain the multicast service configuration as soon as possible to receive the multicast service. The first priority can be indicated by the network device or agreed upon by the protocol.

However, MCCH is generally transmitted periodically. If the terminal does not enter the connected state to obtain the multicast service configuration, but obtains the multicast service configuration through the MCCH message, it needs to wait until the nearest next MCCH transmission period to receive the MCCH message. This may result in too long waiting time, affecting the communication effect of the multicast service. Therefore, it can be determined that the terminal enters the connected state, and then the multicast service configuration is sent to the terminal in the connected state, so that the terminal can obtain the multicast service configuration as soon as possible to receive the multicast service, which is conducive to ensuring the communication effect of the multicast service.

For example, when the priority of the multicast service is lower than or equal to the first priority, the network device can determine that the priority of the multicast service is relatively low, and can determine that the communication related to the multicast service is relatively not urgent, and that the terminal does not need to obtain the multicast service configuration as soon as possible to receive the multicast service.

In this case, it can be determined that the terminal does not enter the connected state to obtain the multicast service configuration, but receives the multicast service configuration through the MCCH message. For example, the terminal waits until the nearest next MCCH transmission period to receive the MCCH message, obtains the multicast service configuration from the MCCH message, and then receives the multicast service according to the multicast service configuration. This is conducive to saving the communication resources occupied by interaction with the network device during the process of entering the connected state.

In an embodiment, the network device may determine whether it enters the connected state to obtain the multicast service configuration according to first indication information sent to the terminal.

The network device may send the first indication information to the terminal according to the current network environment, where the first indication information is used to indicate whether the terminal enters the connected state to obtain the multicast service configuration.

Since the network device is relatively familiar with the overall network environment, compared with the terminal autonomously determining whether to enter the connected state to obtain the multicast service configuration, indicating the terminal by the network device whether to enter the connected state to obtain the multicast service configuration can better adapt to the current network environment. Therefore, it is determined according to the first indication information whether the terminal enters the connected state to obtain the multicast service configuration.

For example, when the first indication information indicates the terminal to enter the connected state to obtain the multicast service configuration, it can be determined that the terminal enters the connected state and obtains the multicast service configuration from the network device.

For example, when the first indication information indicates the terminal not to enter the connected state to obtain the multicast service configuration, it can be determined that the terminal does not enter the connected state to obtain the multicast service configuration, but receives the multicast service configuration through the MCCH message. For example, the terminal waits until the nearest next MCCH transmission period to receive the MCCH message, obtains the multicast service configuration from the MCCH message, and then receives the multicast service according to the multicast service configuration.

The following illustrates, by way of several embodiments, determining whether to enter the connected state to obtain the multicast service configuration according to multiple items of the above four items.

In an embodiment, the network device can determine whether the terminal enters the connected state to obtain the multicast service configuration according to two or more of the following four items: the support capability for receiving the multicast service configuration through the MCCH message, the status of the multicast service session, the priority of the multicast service, and the first indication information of the network device.

In an embodiment, it can be determined, for each item, whether to enter the connected state to obtain the multicast service configuration. If there is no conflict in the results determined for the respective items, it can enter the connected state to obtain the multicast service configuration or not enter the connected state to obtain the multicast service configuration, according to the determined results.

For example, for the support capability of receiving the multicast service configuration through the MCCH message, the terminal has the capability of receiving the multicast service configuration through the MCCH message, and the result determined according to this item is that the terminal does not enter the connected state to obtain multicast service configuration; for the first indication information of the network device, the first indication information indicates the terminal not to enter the connected state to obtain multicast service configuration, and the result determined according to this item is that the terminal does not enter the connected state to obtain multicast service configuration. Then there is no conflict in the results determined according to these two items, and it can be determined according to the determined results that the terminal does not enter the connected state to obtain the multicast service configuration.

For example, for the support capability of receiving the multicast service configuration through the MCCH message, the terminal does not have the capability of receiving the multicast service configuration through the MCCH message, and the result determined according to this item is that the terminal enters the connected state to obtain the multicast service configuration; for the status of the multicast service session, the status of the multicast service session is an active state, and the result determined according to this item is that the terminal enters the connected state to obtain the multicast service configuration. Then there is no conflict between the results determined according to these two items, and it can be determined according to the determined results that the terminal enters the connected state to obtain multicast service configuration.

In an embodiment, it may be determined for each item whether to enter the connected state to obtain the multicast service configuration. If there is a conflict in the results determined for the respective items, the priority of each item may be further considered.

For the convenience of description, the first item represents the support capability for receiving the multicast service configuration through the multicast/broadcast service control channel (MCCH) message; the second item represents the status of the multicast service session; the third item represents the priority of the multicast service; and the fourth item represents the first indication information of the network device.

For example, the fourth item has the highest priority, the first item has the lowest priority, and the second and third items have priorities between those of the first and fourth items, which can be set as needed. For example, the priority of the second item may be higher than that of the third item, or the priority of the third item may be higher than that of the second item. The following description mainly takes the example where the priority of the third item is higher than that of the second item, so the priorities of the above four items are in the order of the fourth item, the third item, the second item, and the first item from high to low.

The network device may first determine for each item whether the terminal enters the connected state to obtain the multicast service configuration. If the results determined for the respective items conflict, it is determined whether to enter the connected state to obtain the multicast service configuration according to the result corresponding to the item with the highest priority.

For example, for the first item, the terminal has the capability of receiving the multicast service configuration through the MCCH message, and the result determined according to the first item is that the terminal does not enter the connected state to obtain the multicast service configuration; for the fourth item, the first indication information indicates the terminal to enter the connected state to obtain the multicast service configuration, and the result determined according to the fourth item is that the terminal enters the connected state to obtain the multicast service configuration. Then, there is a conflict between the results determined according to these two items, among which the fourth item has the highest priority, and it can be determined according to the result corresponding to the fourth item that the terminal enters the connected state to obtain the multicast service configuration.

For example, for the first item, the terminal does not have the capability of receiving the multicast service configuration through the MCCH message, and the result determined according to the first item is that the terminal enters the connected state to obtain the multicast service configuration; for the second item, the status of the multicast service session is an inactive state, and the result determined according to this item is that the terminal does not enter the connected state to obtain the multicast service configuration. Then there is a conflict between the results determined according to these two items, among which the second item has the highest priority, and it can be determined according to the result corresponding to the second item that the terminal does not enter the connected state to obtain the multicast service configuration.

In an embodiment, the terminal's support capability for receiving the multicast service configuration through the multicast/broadcast service control channel includes at least one of the following:
the terminal's support capability for receiving the multicast service configuration through the MCCH message; or
the second cell's support capability for receiving the multicast service configuration through the MCCH message.

In an embodiment, the network device may determine whether the terminal supports receiving the multicast service configuration through the MCCH according to the terminal's support capability for receiving the multicast service configuration through the MCCH message.

For example, if the terminal's support capability for receiving the multicast service configuration through the MCCH message is that it supports receiving the multicast service configuration through the MCCH, the network device determines that the terminal supports receiving the multicast service configuration through the MCCH. For example, if the terminal's support capability for receiving the multicast service configuration through the MCCH message is that it does not support receiving the multicast service configuration through the MCCH, the network device determines that the terminal does not support receiving the multicast service configuration through the MCCH.

In an embodiment, the network device may determine whether the terminal supports receiving the multicast service configuration through the MCCH according to the second cell's support capability for receiving the multicast service configuration through the MCCH message.

For example, if the second cell's support capability for receiving the multicast service configuration through the MCCH message is that it supports receiving the multicast service configuration through the MCCH, the network device determines that the terminal supports receiving the multicast service configuration through MCCH. For example, if the second cell's support capability for receiving the multicast service configuration through the MCCH message is that it does not support receiving the multicast service configuration through the MCCH, the network device determines that the terminal does not support receiving the multicast service configuration through the MCCH.

In an embodiment, the network device may determine whether the terminal supports receiving the multicast service configuration through the MCCH according to the terminal's own support capability for receiving the multicast service configuration through the MCCH message and the second cell's support capability for receiving the multicast service configuration through the MCCH message.

For example, if the terminal's support capability for receiving the multicast service configuration through the MCCH messages is that it supports receiving the multicast service configuration through the MCCH, and the second cell's support capability for receiving the multicast service configuration through the MCCH messages is that it supports receiving the multicast service configuration through the MCCH, the network device determines that the terminal supports receiving the multicast service configuration through the MCCH.

For example, if the terminal's support capability for receiving the multicast service configuration through the MCCH messages is that it does not support receiving the multicast service configuration through the MCCH, and the second cell's support capability for receiving the multicast service configuration through the MCCH messages is that it supports receiving the multicast service configuration through the MCCH, the network device determines that the terminal does not support receiving the multicast service configuration through the MCCH.

For example, if the terminal's support capability for receiving the multicast service configuration through the MCCH messages is that it does not support receiving the multicast service configuration through the MCCH, and the second cell's support capability for receiving the multicast service configuration through the MCCH messages is that it supports receiving the multicast service configuration through the MCCH, the network device determines that the terminal does not support receiving the multicast service configuration through the MCCH.

For example, if the terminal's support capability for receiving the multicast service configuration through the MCCH messages is that it does not support receiving the multicast service configuration through the MCCH, and the second cell's support capability for receiving the multicast service configuration through the MCCH messages is that it does not support receiving the multicast service configuration through the MCCH, the network device determines that the terminal does not support receiving the multicast service configuration through the MCCH.

In an embodiment, when it is determined that the terminal does not support receiving the multicast service configuration through the MCCH message and does not enter the connected state to obtain the multicast service configuration, it is determined that the terminal stops a first operation, where the first operation includes at least one of the following:
receiving the multicast service; or
monitoring a Physical Downlink Control Channel (PDCCH).

In an embodiment, in a case where it is determined that the terminal does not support receiving the multicast service configuration through the MCCH message, it is also determined that the terminal does not enter the connected state to obtain the multicast service configuration. Then, the terminal cannot obtain the multicast service configuration for a period of time, and cannot receive the multicast service according to the multicast service configuration.

In this case, it can be determined that the terminal stops receiving the multicast services, and can also stop monitoring PDCCH, which is conducive to saving power consumption of the terminal. Correspondingly, the network device stops sending the multicast services to the terminal, and can also stop sending PDCCH to the terminal. The PDCCH can carry downlink control information (DCI), which is used to schedule a physical downlink shared channel for transmitting the multicast service, and DCI can also be used to notify MCCH change.

In an embodiment, the terminal's support capability for receiving the multicast service configuration through MCCH is determined based on at least one of the following:
whether the terminal has available MCCH reception configuration; or
the terminal's support capability for obtaining MCCH reception configuration through a broadcast message.

In an embodiment, the MCCH reception configuration is carried in at least one of the following:
system information; or
dedicated signaling.

The system information may include, for example, a System Information Block (SIB). The dedicated signaling may include RRC signaling, and the RRC signaling includes but is not limited to at least one of the following: Radio Resource Control Release (RRCRelease) signaling, Radio Resource Control Reconfiguration (RRCReconfiguration) signaling, and Radio Resource Control Resume (RRCResume) response signaling (e.g., RRCResume).

In an embodiment, the network device may determine whether the terminal supports receiving the multicast service configuration through the MCCH according to whether the terminal has an available MCCH reception configuration.

For example, if the terminal has an available MCCH reception configuration, it can receive the MCCH message according to the MCCH reception configuration, and the network device can determine that the terminal supports receiving the multicast service configuration through the MCCH. For example, if the terminal does not have an available MCCH reception configuration, it cannot receive the MCCH message according to the MCCH reception configuration, and the network device can determine that the terminal does not support receiving the multicast service configuration through the MCCH.

In an embodiment, the network device may determine whether the terminal supports receiving the multicast service configuration through the MCCH according to the terminal's support capability for obtaining MCCH reception configuration through a broadcast message.

For example, if the terminal's support capability for obtaining the MCCH reception configuration through the broadcast message is that the terminal supports obtaining the MCCH reception configuration through the broadcast message, the terminal can obtain the MCCH reception configuration from the broadcast message, and can thus receive the MCCH message according to the MCCH reception configuration, and the network device can determine that the terminal supports receiving the multicast service configuration through the MCCH. For example, if the terminal's support capability for obtaining the MCCH reception configuration through the broadcast message is that the terminal does not support obtaining the MCCH reception configuration through the broadcast message, since the MCCH reception configuration is carried in the broadcast message, the terminal cannot obtain the MCCH reception configuration from the broadcast message, and thus cannot receive the MCCH message according to MCCH reception configuration, and the network device can determine that the terminal does not support receiving the multicast service configuration through the MCCH.

It should be noted that the terminal not supporting obtaining the MCCH reception configuration through the broadcast message includes that part or all of the configuration in the MCCH reception configuration is provided through dedicated signaling, and the terminal needs to enter the connected state to obtain the MCCH reception configuration through the dedicated signaling. If the terminal does not have an available MCCH reception configuration, it can enter the connected state, obtain the MCCH reception configuration through the dedicated signaling, and then receive the MCCH message according to the MCCH reception configuration.

In an embodiment, the network device may determine whether the terminal supports receiving multicast service configuration through MCCH according to whether the terminal has an available MCCH reception configuration and according to the terminal's support capability for obtaining MCCH reception configuration through a broadcast message.

For example, if the terminal has an available MCCH reception configuration, and the terminal's support capability for obtaining the MCCH reception configuration through the broadcast message is that it supports obtaining the MCCH reception configuration through the broadcast message, the network device can determine that the terminal supports receiving the multicast service configuration through the MCCH.

For example, if the terminal does not have an available MCCH reception configuration, and the terminal's support capability for obtaining the MCCH reception configuration through the broadcast message is that it supports obtaining the MCCH reception configuration through the broadcast message, the network device can determine that the terminal supports receiving the multicast service configuration through the MCCH.

For example, if the terminal has an available MCCH reception configuration, and the terminal's support capability for obtaining the MCCH reception configuration through a broadcast message is that it does not support obtaining the MCCH reception configuration through the broadcast message, the network device can determine that the terminal supports receiving the multicast service configuration through the MCCH.

For example, if the terminal does not have an available MCCH reception configuration, and the terminal's support capability for obtaining the MCCH reception configuration through the broadcast message is that it does not support obtaining the MCCH reception configuration through the broadcast message, the network device can determine that the terminal does not support receiving the multicast service configuration through the MCCH.

In an embodiment, the second cell's support capability for receiving the multicast service configuration through the MCCH is determined based on at least one of the following:
whether the second cell supports inactive multicast service;
whether the second cell supports broadcasting a MCCH message; or
whether the second cell supports broadcasting MCCH reception configuration.

In an embodiment, the network device may determine whether the second cell supports receiving the multicast service configuration through the MCCH according to whether the second cell supports the inactive multicast service.

For example, if the second cell supports inactive multicast services, the network device can determine that the second cell supports receiving multicast service configuration through MCCH. For example, if the second cell does not support inactive multicast services, the network device can determine that the second cell does not support receiving multicast service configuration through MCCH.

In an embodiment, the network device may determine whether the second cell supports receiving the multicast service configuration through the MCCH according to whether the second cell supports broadcasting a MCCH message.

For example, if the second cell supports broadcasting the MCCH message, the second cell can carry the multicast service configuration by broadcasting the MCCH message, so the network device can determine that the second cell supports receiving the multicast service configuration through MCCH. For example, if the second cell does not support broadcasting the MCCH message, the second cell cannot carry the multicast service configuration by broadcasting the MCCH message, so the network device can determine that the second cell does not support receiving the multicast service configuration through MCCH.

In an embodiment, the network device may determine whether the second cell supports receiving the multicast service configuration through the MCCH according to whether the second cell supports broadcasting MCCH reception configuration.

For example, if the second cell supports broadcasting MCCH reception configuration, the network device may determine that the second cell supports receiving multicast service configuration through MCCH. For example, if the second cell does not support broadcasting MCCH reception configuration, the network device may determine that the second cell does not support receiving multicast service configuration through MCCH.

It should be noted that the second cell not supporting broadcasting the MCCH reception configuration includes that part or all of the configuration in the MCCH reception configuration is provided by dedicated signaling. The terminal needs to enter the connected state in the second cell to obtain the MCCH reception configuration through the dedicated signaling. If the terminal does not have an available MCCH reception configuration in the second cell, it can enter the connected state, obtain the MCCH reception configuration through dedicated signaling, and then receive the MCCH message according to the MCCH reception configuration.

In an embodiment, the network device can determine whether the second cell supports receiving the multicast service configuration through the MCCH according to whether the second cell supports inactive multicast service, whether the second cell supports broadcasting a MCCH message, and whether the second cell supports broadcasting MCCH reception configuration.

As long as the second cell supports broadcasting the MCCH message, regardless of whether the second cell supports inactive multicast services or not, and whether the second cell supports broadcasting MCCH reception configuration or not, it can be determined that the second cell supports receiving the multicast service configuration through MCCH.

When the second cell does not support broadcasting the MCCH message, no matter whether the second cell supports the inactive multicast service or not and whether the second cell supports broadcasting the MCCH reception configuration, it can be determined that the second cell does not support receiving the multicast service configuration through MCCH.

In an embodiment, the configuration reception determining method further includes: sending second indication information to the terminal, where the second indication information is used to indicate the second cell's support capability for receiving multicast service configuration through MCCH.

In an embodiment, the network device may indicate, through the second indication information sent in the first cell, the second cell's support capability for receiving the multicast service configuration through the MCCH. In addition to indicating the second cell's support capability for receiving the multicast service configuration through the MCCH, the second cell may also indicate the support capability of neighboring cells of the first cell for receiving the multicast service configuration through the MCCH.

Accordingly, according to the second indication information, the terminal can determine the second cell's support capability for receiving the multicast service configuration through the MCCH, and can also determine the support capability of the neighboring cells of the first cell for receiving the multicast service configuration through the MCCH. Accordingly, when the terminal subsequently moves to any neighboring cell of the first cell, it can promptly determine the support capability of the moved-to cell for receiving the multicast service configuration through the MCCH.

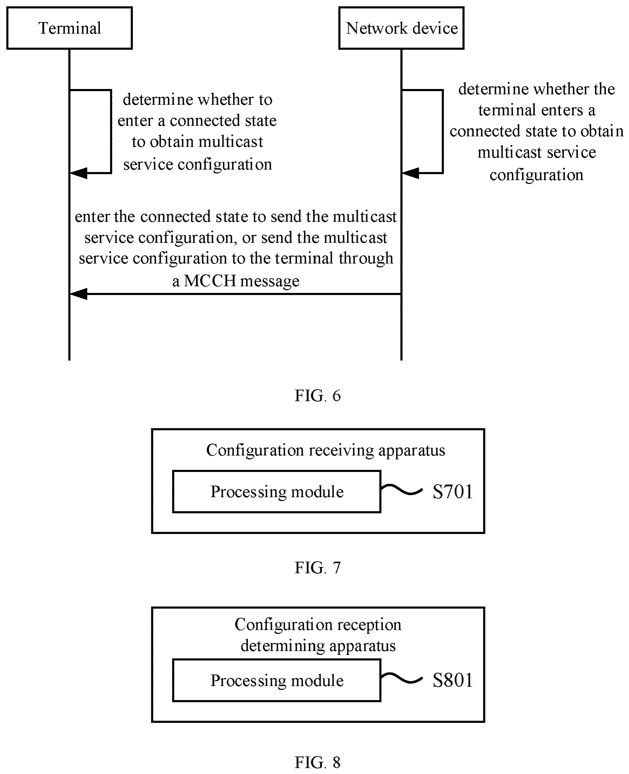

FIG. 6 is a schematic diagram showing interaction between a terminal and a network device according to an embodiment of the present disclosure.

As shown in FIG. 6, when the terminal moves from a first cell to a second cell and has no available multicast service configuration in the second cell, it determines whether to enter a connected state to obtain multicast service configuration.

Correspondingly, when the terminal moves from the first cell to the second cell and has no available multicast service configuration in the second cell, the network device can determine whether the terminal enters the connected state to obtain the multicast service configuration, so as to subsequently communicate with the terminal in the connected state or in a non-connected state, for example, entering the connected state to send the multicast service configuration to the terminal, or for example, sending the multicast service configuration to the terminal through the MCCH message.

It should be noted that for other contents involved in this embodiment, please refer to the description of the relevant contents in the previous embodiments, which will not be repeated here.

Corresponding to the aforementioned embodiments of the configuration receiving method and the configuration reception determining method, the present disclosure also provides embodiments of a configuration receiving apparatus and a configuration reception determining apparatus.

FIG. 7 is a schematic block diagram of a configuration receiving apparatus according to an embodiment of the present disclosure. As shown in FIG. 7, the configuration receiving apparatus includes:
a processing module 701, configured to determine whether to enter a connected state to obtain multicast service configuration when a terminal moves from a first cell to a second cell and the terminal has no available multicast service configuration in the second cell.

In an embodiment, the processing module is configured to determine whether to enter the connected state to obtain the multicast service configuration according to at least one of the following:
the terminal's support capability for receiving multicast service configuration through a multicast/broadcast service control channel (MCCH) message;
status of a multicast service session;
a priority of multicast service; or
first indication information of a network device.

In an embodiment, the processing module is configured to enter the connected state to obtain the multicast service configuration when a first condition is met, where the first condition includes at least one of the following:
the terminal does not support receiving the multicast service configuration through the MCCH message;
the status of the multicast service session is that the multicast service session is in an active state;
the priority of the multicast service is higher than a first priority; or
the first indication information indicates the terminal to enter the connected state.

In an embodiment, the processing module is configured to not enter the connected state to obtain the multicast service configuration when a second condition is met, where the second condition includes at least one of the following:
the terminal supports receiving the multicast service configuration through the MCCH message;
the status of the multicast service session is that the multicast service session is in an inactive state;
the priority of the multicast service is lower than the first priority; or
the first indication information indicates the terminal not to enter the connected state.

In an embodiment, the processing module is further configured to stop a first operation when the terminal does not support receiving the multicast service configuration through the MCCH message and does not enter the connected state to obtain the multicast service configuration, where the first operation includes at least one of the following:
receiving multicast service; or
monitoring a physical downlink control channel (PDCCH).

In an embodiment, the terminal's support capability for receiving the multicast service configuration through the multicast/broadcast service control channel includes at least one of the following:
the terminal's support capability for receiving the multicast service configuration through the MCCH message; or
the second cell's support capability for receiving the multicast service configuration through the MCCH message.

In an embodiment, the terminal's support capability for receiving multicast service configuration through MCCH is determined based on at least one of the following:
whether the terminal has an available MCCH reception configuration; or
the terminal's support capability for obtaining MCCH reception configuration through a broadcast message.

In an embodiment, the second cell's support capability for receiving the multicast service configuration through the MCCH is determined based on at least one of the following:
whether the second cell supports inactive multicast service;
whether the second cell supports broadcasting a MCCH message; or
whether the second cell supports broadcasting MCCH reception configuration.

In an embodiment, the processing module is further configured to determine the second cell's support capability for receiving the multicast service configuration through the MCCH according to second indication information of the network device.

In an embodiment, the MCCH reception configuration is carried in at least one of the following: system information; or dedicated signaling.

In an embodiment, the terminal is a terminal that joins a multicast service.

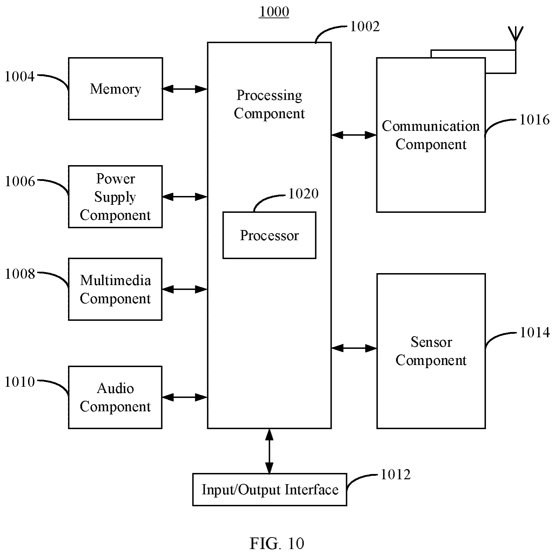

FIG. 8 is a schematic block diagram of a configuration reception determining apparatus according to an embodiment of the present disclosure. As shown in FIG. 10, the configuration reception determining apparatus includes:
a processing module 801, configured to determine whether a terminal enters a connected state to obtain multicast service configuration when it is determined that the terminal moves from a first cell to a second cell and has no available multicast service configuration in the second cell.

In an embodiment, the processing module is configured to determine whether the terminal enters the connected state to obtain the multicast service configuration according to at least one of the following:
the terminal's support capability for receiving the multicast service configuration through a multicast/broadcast service control channel (MCCH) message;
status of a multicast service session of the terminal;
a priority of multicast service of the terminal; or
first indication information of the network device.

In an embodiment, the processing module is configured to determine that the terminal enters the connected state to obtain the multicast service configuration when a first condition is met, where the first condition includes at least one of the following:
the terminal does not support receiving the multicast service configuration through the MCCH message;
the status of the multicast service session is that the multicast service session is in an active state;
the priority of the multicast service is higher than a first priority; or
the first indication information indicates the terminal to enter the connected state.

In an embodiment, the processing module is configured to determine that the terminal does not enter the connected state to obtain the multicast service configuration when a second condition is met, where the second condition includes at least one of the following:
the terminal supports receiving the multicast service configuration through the MCCH message;
the status of the multicast service session is that the multicast service session is in an inactive state;
the priority of the multicast service is lower than a first priority; or
the first indication information indicates the terminal not to enter the connected state.

In an embodiment, the terminal's support capability for receiving the multicast service configuration through the multicast/broadcast service control channel includes at least one of the following:
the terminal's support capability for receiving the multicast service configuration through the MCCH message; or
the second cell's support capability for receiving the multicast service configuration through the MCCH message.

In an embodiment, the terminal's support capability for receiving the multicast service configuration through MCCH is determined based on at least one of the following:
whether the terminal has an available MCCH reception configuration; or
the terminal's support capability for obtaining the MCCH reception configuration through a broadcast message.

In an embodiment, the support capability of the second cell for receiving the multicast service configuration through the MCCH is determined based on at least one of the following:
whether the second cell supports inactive multicast service;
whether the second cell supports broadcasting a MCCH message; or
whether the second cell supports broadcasting the MCCH reception configuration.

In an embodiment, the apparatus further includes: a sending module configured to send second indication information to the terminal, where the second indication information is used to indicate support capability of the second cell for receiving the multicast service configuration through MCCH.

In an embodiment, the MCCH reception configuration is carried in at least one of the following: system information; or dedicated signaling.

In an embodiment, the terminal is a terminal that joins a multicast service.

For the apparatus embodiments, since they basically correspond to the method embodiments, for the relevant parts, please refer to the description of the method embodiments. The apparatus embodiments described above are only illustrative, where the modules described as separate components may be or may not be physically separated, and the components shown as modules may be or may not be physical modules, that is, they may be located in one place, or they may be distributed on multiple network modules. Some or all of the modules may be selected according to actual needs to achieve the purpose of the scheme of the embodiments. Those of ordinary skill in the art can understand and implement it without paying creative work.

An embodiment of the present disclosure further proposes a configuration receiving system, including a terminal and a network device, where the terminal is configured to implement the configuration receiving method described in any of the above embodiments, and the network device is configured to implement the configuration reception determining method described in any of the above embodiments.

An embodiment of the present disclosure further proposes a terminal, including: a processor; and a memory configured to store a computer program; where the computer program, when being executed by the processor, implements the configuration receiving method described in any of the above embodiments.

An embodiment of the present disclosure further proposes a network device, including: a processor; and a memory configured to store a computer program; where the computer program, when being executed by the processor, implements the configuration reception determining method described in any of the above embodiments.

An embodiment of the present disclosure further provides a computer-readable storage medium configured to store a computer program, where the computer program, when being executed by a processor, implements the configuration receiving method described in any of the above embodiments.

An embodiment of the present disclosure further provides a computer-readable storage medium configured to store a computer program, where the computer program, when being executed by a processor, implements the configuration reception determining method described in any of the above embodiments.

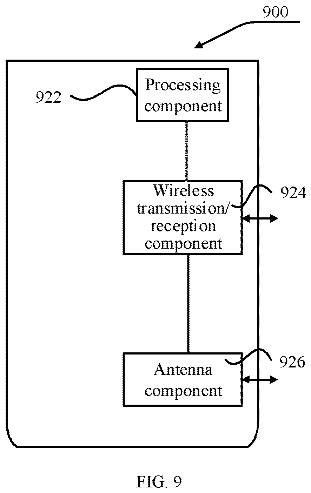

As shown in FIG. 9, FIG. 9 is a schematic block diagram of an apparatus 900 for configuration reception determining according to an embodiment of the present disclosure. The apparatus 900 may be a base station. Referring to FIG. 9, the apparatus 900 includes a processing component 922, a wireless transmission/reception component 924, an antenna component 926, and a signal processing part specific to a wireless interface, and the processing component 922 may further include one or more processors. One of the processors in the processing component 922 may be configured to implement the configuration reception determining method described in any of the above embodiments.

FIG. 10 is a schematic block diagram of an apparatus 1000 for configuration receiving according to an embodiment of the present disclosure. For example, the apparatus 1000 may be a terminal, such as a mobile phone, a computer, a digital broadcast terminal, a messaging device, a game console, a tablet device, a medical device, a fitness device, a personal digital assistant, etc.

Referring to FIG. 10, the apparatus 1000 may include one or more of the following components: a processing component 1002, a memory 1004, a power supply component 1006, a multimedia component 1008, an audio component 1010, an input/output (I/O) interface 1012, a sensor component 1014, and a communication component 1016.

The processing component 1002 generally controls the overall operation of the apparatus 1000, such as operations associated with display, phone calls, data communications, camera operations, and recording operations. The processing component 1002 may include one or more processors 1020 to execute instructions to implement all or part of the steps of the configuration receiving method described in any of the above embodiments. In addition, the processing component 1002 may include one or more modules to facilitate interaction between the processing component 1002 and other components. For example, the processing component 1002 may include a multimedia module to facilitate the interaction between the multimedia component 1008 and the processing component 1002.

The memory 1004 is configured to store various types of data to support operations on the apparatus 1000. Examples of such data include instructions for any application or method operating on the apparatus 1000, contact data, phonebook data, messages, pictures, videos, and the like.

The power supply component 1006 provides power to the various components of the apparatus 1000. The power supply component 1006 may include a power management system, one or more power supplies, and other components associated with generating, managing, and distributing power for the apparatus 1000.

The multimedia component 1008 includes a screen that provides an output interface between the apparatus 1000 and the user. In some embodiments, the screen may include a liquid crystal display (LCD) and a touch panel (TP). If the screen includes a touch panel, the screen may be implemented as a touch screen to receive input signals from the user.

The audio component 1010 is configured to output and/or input audio signals. For example, the audio component 1010 includes a microphone (MIC), and when the apparatus 1000 is in an operation mode, such as a call mode, a recording mode, and a speech recognition mode, the microphone is configured to receive an external audio signal. The received audio signal can be further stored in the memory 1004 or sent through the communication component 1016. In some embodiments, the audio component 1010 also includes a speaker for outputting audio signals.

The I/O interface 1012 provides an interface between processing component 1002 and peripheral interface modules, such as a keyboard, a click wheel, buttons, etc. These buttons may include, but are not limited to, a home button, a volume button, a start button, and a lock button.

The sensor component 1014 includes one or more sensors for providing status assessment of various aspects for the apparatus 1000.

The communication component 1016 is configured to facilitate wired or wireless communication between the apparatus 1000 and other devices. The apparatus 1000 can access a wireless network based on a communication standard, such as WiFi, 2G, 3G, 4G LTE, 5G NR or a combination thereof. In an illustrative embodiment, the communication component 1016 receives a broadcast signal or broadcast-related information from an external broadcast management system through a broadcast channel. In an illustrative embodiment, the communication component 1016 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an illustrative embodiment, the apparatus 1000 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components, for performing the configuration receiving method described in any of the above embodiments.

In an illustrative embodiment, a non-transitory computer-readable storage medium including instructions is also provided, such as a memory 1004 including instructions, and the instructions can be executed by the processor 1020 of the apparatus 1000 to complete the configuration receiving method described in any of the above embodiments. For example, the non-transitory computer-readable storage medium can be a ROM, a random access memory (RAM), a CD-ROM, a magnetic tape, a floppy disk, an optical data storage device, etc.

Those skilled in the art will readily appreciate other embodiments of the present disclosure after considering the specification and practicing the disclosure disclosed herein. The present disclosure is intended to cover any variations, uses, or adaptations of the present disclosure that follow the general principles of the present disclosure and include common knowledge or conventional technical measure in the art that are not disclosed in the present disclosure. The description and embodiments are to be considered illustrative only, and the true scope and spirit of the present disclosure are indicated by the following claims.

It should be understood that the present disclosure is not limited to the precise structures that have been described above and shown in the drawings, and that various modifications and changes may be made without departing from the scope thereof. The scope of the present disclosure is limited only by the appended claims.

## Claims

1. A configuration receiving method, performed by a terminal, the method comprising:
in a case of moving from a first cell to a second cell and having no available multicast service configuration in the second cell, determining whether to enter a connected state to obtain the multicast service configuration.

2. The method according to claim 1, wherein the determining whether to enter the connected state to obtain the multicast service configuration comprises:
determining whether to enter the connected state to obtain the multicast service configuration according to at least one of:
support capability for receiving the multicast service configuration through a Multicast/Broadcast Service Control Channel (MCCH) message;
status of a multicast service session;
a priority of multicast service; or
first indication information of a network device.

3. The method according to claim 2, wherein the determining whether to enter the connected state to obtain the multicast service configuration comprises:
entering the connected state to obtain the multicast service configuration in a case where a first condition is met, wherein the first condition comprises at least one of the following:
receiving the multicast service configuration through the MCCH message is not supported;
the status of the multicast service session is that the multicast service session is in an active state;
the priority of the multicast service is higher than a first priority; or
the first indication information indicates the terminal to enter the connected state.

4. The method according to claim 2 or 3, wherein the determining whether to enter the connected state to obtain the multicast service configuration comprises:
not entering the connected state to obtain the multicast service configuration in a case where a second condition is met, wherein the second condition comprises at least one of the following:
receiving the multicast service configuration through the MCCH message is supported;
the status of the multicast service session is that the multicast service session is in an inactive state;
the priority of the multicast service is lower than a first priority; or
the first indication information indicates the terminal not to enter the connected state.

5. The method according to any one of claims 2 to 4, wherein the method further comprises:
stopping a first operation in a case where receiving the multicast service configuration through the MCCH message is not supported and it does not enter the connected state to obtain the multicast service configuration, wherein the first operation comprises at least one of the following:
receiving multicast service; or
monitoring a physical downlink control channel (PDCCH).

6. The method according to claim 2, wherein the support capability for receiving the multicast service configuration through the Multicast/Broadcast Service Control Channel comprises at least one of the following:
the terminal's support capability for receiving the multicast service configuration through the MCCH message; or
the second cell's support capability for receiving the multicast service configuration through the MCCH message.

7. The method according to claim 6, wherein the terminal's support capability for receiving the multicast service configuration through the MCCH is determined based on at least one of the following:
whether the terminal has an available MCCH reception configuration; or
the terminal's supports capability for obtaining the MCCH reception configuration through a broadcast message.

8. The method according to claim 6, wherein the second cell's support capability for receiving the multicast service configuration through the MCCH is determined based on at least one of the following:
whether the second cell supports inactive multicast service;
whether the second cell supports broadcasting the MCCH message; or
whether the second cell supports broadcasting the MCCH reception configuration.

9. The method according to claim 6 or 8, wherein the method further comprises:
determining the second cell's support capability for receiving the multicast service configuration through the MCCH according to second indication information of the network device.

10. The method according to claim 7 or 8, wherein the MCCH reception configuration is carried in at least one of the following:
system information; or
dedicated signaling.

11. The method according to any one of claims 1 to 10, wherein the terminal is a terminal that joins a multicast service.

12. A configuration reception determining method, performed by a network device, the method comprising:
in a case where it is determined that a terminal moves from a first cell to a second cell and has no available multicast service configuration in the second cell, determining whether the terminal enters a connected state to obtain the multicast service configuration.

13. The method according to claim 12, wherein the determining whether the terminal enters the connected state to obtain the multicast service configuration comprises:
determining whether the terminal enters the connected state to obtain the multicast service configuration according to at least one of the following:
the terminal's support capability for receiving the multicast service configuration through a Multicast/Broadcast Service Control Channel (MCCH) message;
status of a multicast service session of the terminal;
a priority of multicast service of the terminal; or
first indication information of the network device.

14. The method according to claim 13, wherein the determining whether the terminal enters the connected state to obtain the multicast service configuration comprises:
determining that the terminal enters the connected state to obtain the multicast service configuration in a case where a first condition is met, wherein the first condition comprises at least one of the following:
the terminal does not support receiving the multicast service configuration through the MCCH message;
the status of the multicast service session is that the multicast service session is in an active state;
the priority of the multicast service is higher than a first priority; or
the first indication information indicates the terminal to enter the connected state.

15. The method according to claim 13 or 14, wherein the determining whether to enter the connected state to obtain the multicast service configuration comprises:
determining that the terminal does not enter the connected state to obtain the multicast service configuration in a case where a second condition is met, wherein the second condition comprises at least one of the following:
the terminal supports receiving the multicast service configuration through the MCCH message;
the status of the multicast service session is that the multicast service session is in an inactive state;
the priority of the multicast service is lower than a first priority; or
the first indication information indicates the terminal not to enter the connected state.

16. The method according to claim 13, wherein the terminal's support capability for receiving the multicast service configuration through the Multicast/Broadcast Service Control Channel comprises at least one of the following:
the terminal's support capability for receiving the multicast service configuration through the MCCH message; or
the second cell's support capability for receiving the multicast service configuration through the MCCH message.

17. The method according to claim 16, wherein the terminal's support capability for receiving the multicast service configuration through the MCCH is determined based on at least one of the following:
whether the terminal has an available MCCH reception configuration; or
the terminal's support capability for obtaining the MCCH reception configuration through a broadcast message.

18. The method according to claim 16, wherein the second cell' s support capability for receiving the multicast service configuration through the MCCH is determined based on at least one of the following:
whether the second cell supports inactive multicast service;
whether the second cell supports broadcasting the MCCH message; or
whether the second cell supports broadcasting MCCH reception configuration.

19. The method according to claim 16 or 18, wherein the method further comprises:
sending second indication information to the terminal, wherein the second indication information is used to indicate the second cell's support capability for receiving the multicast service configuration through the MCCH.

20. The method according to claim 17 or 18, wherein the MCCH reception configuration is carried in at least one of the following:
system information; or
dedicated signaling.

21. The method according to any one of claims 12 to 20, wherein the terminal is a terminal that joins a multicast service.

22. A configuration receiving apparatus, the apparatus comprising:
a processing module, configured to determine whether to enter a connected state to obtain multicast service configuration in a case where a terminal moves from a first cell to a second cell and the terminal has no available multicast service configuration in the second cell.

23. A configuration reception determining apparatus, the apparatus comprising:
a processing module, configured to determine whether a terminal enters a connected state to obtain multicast service configuration in a case where it is determined that the terminal moves from a first cell to a second cell and has no available multicast service configuration in the second cell.

24. A configuration receiving system, comprising a terminal and a network device, wherein the terminal is configured to implement the configuration receiving method according to any one of claims 1 to 11, and the network device is configured to implement the configuration reception determining method according to any one of claims 12 to 21.

25. A terminal, comprising:
a processor; and
a memory configured to store a computer program;
wherein the computer program, when being executed by the processor, implements the configuration receiving method according to any one of claims 1 to 11.

26. A network device, comprising:
a processor; and
a memory configured to store a computer program;
wherein the computer program, when being executed by the processor, implements the configuration reception determining method according to any one of claims 12 to 21.

27. A computer-readable storage medium configured to store a computer program, wherein the computer program, when being executed by a processor, implements the configuration receiving method according to any one of claims 1 to 11.

28. A computer-readable storage medium configured to store a computer program, wherein the computer program, when being executed by a processor, implements the configuration reception determining method according to any one of claims 12 to 21.
